# EUROPEAN PATENT SPECIFICATION

(11) **EP 0 784 928 B1**
(45) Date of publication and mention of the grant of the patent: **17.10.2001**
(21) Application number: 96920840.4
(22) Date of filing: 01.07.1996
(51) Int. Cl.: A01K 5/00, A01F 29/06, A01D 90/10

(54) **TROUGH WITH DISPLACER ELEMENT FOR THE PREPARATION OF LIVE-STOCK FEED**
TROG MIT VERDRÄNGERELEMENT FÜR DIE AUFBEREITUNG VON VIEHFUTTER
AUGE AVEC ELEMENT DE DEPLACEMENT POUR LA PREPARATION D'ALIMENTS POUR LE BETAIL

(30) Priority: 30.06.1995 ES 9501804 U
(43) Date of publication of application: 23.07.1997
(73) Proprietor: Talleres Torres Marti, S.L., 22400 Monzon (ES)
(72) Inventor: TORRES MARTI, Fernando, E-22400 Monzon (ES)
(74) Representative: Gollob, Ulrik, Dr.
(86) International application number: ES9600141
(87) International publication number: WO9701956

(56) References cited:
- EP-A- 0 562 693
- EP-A- 0 612 465
- ES-A- 2 068 142
- ES-U- 266 261
- ES-U- 276 387
- GB-A- 2 167 632
- GB-A- 2 283 898
- US-A- 5 249 751

## Description

The present invention relates to a trough with displacer element for the preparation of livestock feed, according to the preamble of claim 1.

Currently, in the known types of trailers, the troughs or container elements that are generally used have a circular-shaped bottom, to which is adapted a hashing device comprising an axis that is attached to the ends of the trough, at the ends of which begin a number of continuous spirals converging to its center, thus producing a movement which permits the product to approach to the center to be hashed or mixed; from said circular bottom, the walls or sides of the trough are extended, being arranged such that one of them begins at the bottom of the through, being inclined towards outside up to a certain height and then continuing vertically therefrom, while the opposite side is completely perpendicular in order to achieve the movement of the product to the center of the trough. Over the center of the aforementioned vertical side, a lever of large length is occasionally placed which is driven by means of a hydraulic cylinder, to provide a pendular movement of about 90 degrees at its lower end, such that together with the perpendicular angle of the wall that holds the lever, allows the product to be driven to the ends of the trough, to begin a new recirculation by means of the endless helical spiral. Certain improvements have been made by a trough with displacer element according to EP-A-0 562 693.

The currently known troughs, have the drawback that the product which is being manipulated is piled up at the center thereof in a conical stack, this being the reason why the troughs tend to be somewhat high, narrow and elongated, requiring in certain cases the use of a hydraulic-driven lever to stir the product.

Another drawback in certain current troughs, is that, given their narrowness, certain types of straw packs or bales cannot be entered as a whole, being this the case with those of cylindrical type, which have a considerable volume for which troughs have been designed to allow the introduction of the aforementioned cylindrical bales, thus impairing considerably the power consumption.

The trough with displacer element for the preparation of livestock feed according to claim 1 object of the present invention, has been devised to solve these drawbacks.

This trough comprises a slightly elongated container body, the V-shaped base of which is ended at the bottom in a circular configuration, while its inclined walls present at each end thereof perpendicular or optionally angled extensions, that are finished at their end or upper parts with a small section slanted towards the inside of the compartment. In the center of one of the lateral walls that conform the trough, one or several displacer devices are located made of a shovel in the shape of a watch hand, that are driven by a hydraulic motor. These displacer devices have been provided for preventing the piling up of the product in the place where they are located.

Another feature to present is that of the incorporation of a hashing roller, comprising a cylindrical central axis, on which a spiral is located with two tracks clearly differentiated as to their opposing directions of displacement, being defined the beginning of each track of the spiral in a point close to the longitudinal center of the aforementioned central axis.

Each of these tracks begins, at a point which coincides with the one opposite thereto, with three blades conveniently placed to initiate the forming of a spiral; these blades, at the same time that hash the product due to their rotation, also cause the displacement of the product, either to the ends of the trough or to the center thereof, according to the direction of rotation of the element. Facing the blades described above, begins a continuous spiral, having a laminar cross-section and attached directly to the central axis, being the beginning of said spiral of a smaller radius which progressively tends to become equal to the maximum diameter of the spiral at approximately one fourth of a turn. After completing the first turn and continuing with the same external diameter, the spiral is then made of a plate with variable height and cross-section, attached to several radii that fix it to the central axis. The front track has an extra turn of spiral made of plate. Multiple cutting disks are provided, both in the central blades and through the whole arrangement of the two spirals, said cutting disks extending out slightly from the external diameter of the spirals.

The trough herein presented has the particular advantage over the known means, that it allows a lorger load of product, that is to say that a trailer equipped with the disclosed trough, may be made with smaller dimensions that the ones which include the known means, in order to obtein the same amount of manipulated product, since the design of the two lateral walls allows for a larger width of the trough, at the same time that its length and height are decreased, becoming then possible to enter bales of fodder or straw of cylindrical shape, with considerable size. This, together with the mechanism designed for stirring and hashing the product, allow a saving of power of between 20 and 30 percent.

Another advantage is the quality of the finished product, that is perfectly stirred during the hashing and mixing of the same, due to the fact that the product is directed to the center of the trough by the hashing spiral and at this point is again directed to the ends of the helical spiral by the displacer devices.

Another advantage is that being the product in movement inside the trough, and the arm of the lever of the displacer elements being small, large working momentums are prevented, where the hand under more pressure is liberated in an intermittent manner thus allowing its movement, such that it contributes to the circulation of the product, eventually providing a more homogeneous mix.

Another advantage is the incorporation of a new hashing roller, as it removes possible obstructions, while at the same time it allows a considerable economic saving.

Finally, as further advantage of this device, its mobility and savings are stated both in time and in power, since shut-downs produced by obstructions are avoided as are also the overstrains that are produced by such obstructions.

For a better understanding of the object of this invention, a preferred practical embodiment of the same has been represented in the attached drawings in which:

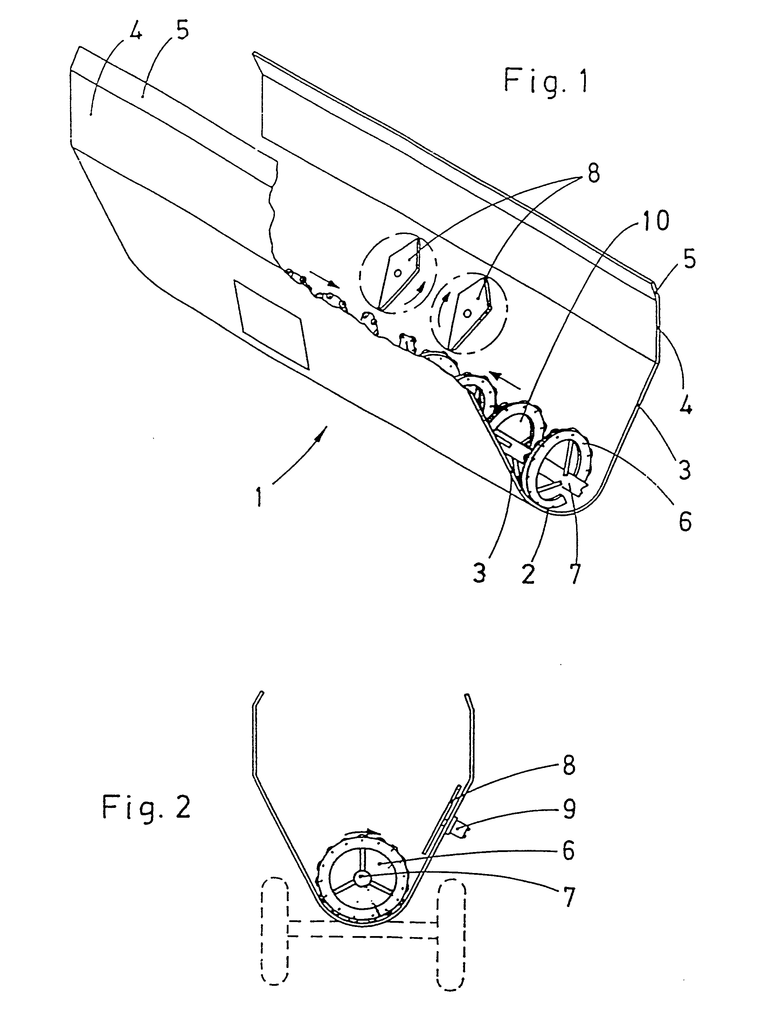

- Figure 1 shows a perspective view of the invention, in which neither the front nor the rear closing devices are showns for a better understanding.
- Figure 2 shows a front view of the trough, in which the displacer element is observed inside.

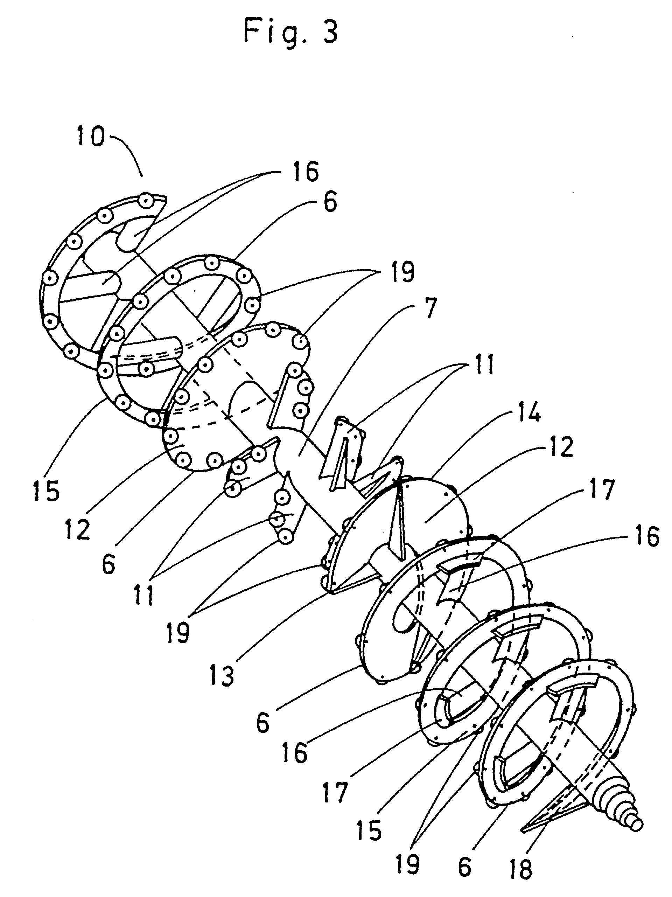

- Figure 3 shows a perspective view of the hashing roller.

The trough with displacer element for the preparation of livestock feed as herein presented, incorporates, as it can be noticed in the referenced figures, a body (1) made preferably of plates with laminated cross-section, having at the lower portion thereof a V shaped configuration the vertex of which (2) ends in a circular shape, while the inclined tracks (3) are each extended at their end by panels (4) arranged either perpendicular and parallel to each other or with a variable inclination in one or both of them, the upper ends of each ending at a small fringe (5) slightly inclined towards the inside of the trough.

The circular-shaped bottom of the trough (2), forms a bed of the helical spiral that is in charge of both hashing the products and making a proper mixture, said spiral being made of two tracks with different directions for channelising the product, that is, by turning of the axis (7) the product moves approaching towards the center in order to be stirred and hashed, while if the movement of the axis (7) is inverted, the product is displaced towards the ends of the trough where optional exits can be placed for the already hashed product.

In the center of one of the lateral walls of the trough and inside thereof one or several displacer elements (8) are placed being made of rotatory shovels each similar to a watch hand, and each driven by an hydraulic motor (9) arranged in parallel, that allow the turning of both hands at the same time or indistinctly depending on the pressure exerted by the product entered in the trough.

The hashing roller (10) incorporates a central axis (7) of circular section, to which and at a central section thereof a number of blades (11) are attached, such that half of them have a slope in relation to a vertical direction with respect to their bases in an opposite manner than that of the other blades that face them (11). Following the latter according to the progress of the structure of the spiral towards the front end of the axis, a spiral turn (12) has been attached to the axis, which at an inclined part thereof (13) has a radius of about half of the maximum radius of the spiral (14), said radius increasing progressively from its beginning (13), until it reaches at about a fourth of a turn the maximum diameter of the spiral, which has a laminated constitution in this first turn (12).

After the first turn of the spiral (12) and maintaining the same maximum external diameter, the spiral becomes hollow, i.e. it is formed of a plate (15) of variable width and dimensions,which is joined to the central axis (7) by means of a number of radii (16) and their associated supports (17). The spiral (15) formed of plate consists of three turns approximately, being fixed at its end and attached to the axis (7) by means of a support piece (18).

The rear track of the spiral has the same features than the front one, the only variation being that the spiral (15) formed of plate has two turns instead of three and that the final fixing to attach to the axis is made by means of a radius (16).

The blades (11) as well as the whole external diameter of the spirals (6) have been provided with a number of hashing disks (19) of cylindrical configuration, that may be changed with others.

## Claims

1. Trough with displacer element for the preparation of livestock feed, of the type that are integrated in certain trailers suitable therefor, for hashing, mixing and homogenizing the diverse products that form livestock feed used in stock breeding installations, having a slightly elongated body (1) with a section that approximately at its lower half adopts a V shape, the vertex (2) of which being finished in a circular shape, while its inclined walls (3) are each extended at their end by means of other panels (4), wherein these panels (4) are arranged parallel to the vertex (7) of the slightly elongated body (1) and parallel to each other or one or both of them with a variable inclination, the upper ends of the aforementioned panels (4) being finished by means of a fringe (5) inclined towards the inside of the trough, wherein one or several displacer elements (8) for displacing the products to be manipulated are placed at the center of one of the walls (3), said displacer elements (8) being made each of a shovel, shaped such as a watch hand of variable thickness, that rotates by virtue of a hydraulic motor (9),
**characterized by that**
each one of the displacer elements (8) has optional directions of turn, being independent one from the other.

2. Trough with displacer element for the preparation of livestock feed, according to the preceeding claim, **characterized in that** the hashing roller (10) incorporates spirals that at their internal beginning in front of the blades (11) comprise a fist turn in blind spiral (12) of a laminated section, directly attached to the central axis, beginning the aforementioned turn (12) at a point (13) with a radius of approximately one half of the maximum external radius (6) of the spiral (12), this minimum starting radius of point (13) approaching to equal in a progressively increasing manner to the maximum radius (6) after a run of approximately 90 degrees.

3. Trough with displacer element for the preparation of livestock feed, according to any of the preceeding claims, **characterized in that** towards the front end of the roller (6) and following the blind spiral (12) the spiral continues in three further turns, said three turns being formed of a plate (15) of variable height and thickness; said three turns being fixed to the axis (7) by means of a number of radii (16) and with the collaboration of a number of supports (17).

4. Trough with displacer element for the preparation of livestock feed, according to any of the preceeding claims, **characterized in that** the spiral corresponding to the rear end is similar to the one corresponding to the front end, except that the front spiral has three plate-based spiral turns (15) while the rear spiral has two of the aforementioned plate-based spiral turns (15).

## Patentansprüche

1. Trog mit Verschiebeelement zur Vorbereitung von Viehfutter, welcher in bestimmten dafür geeigneten Anhängern zum Zerkleinern, Vermischen und Homogenisieren der unterschiedlichen Produkte, die Viehfutter bilden, integriert ist, der in Viehfütterungseinrichtungen verwendet wird, wobei der Trog einen leicht länglichen Körper (1) mit einem Abschnitt, der in etwa an seiner unteren Hälfte eine V-Form annimmt, dessen Scheitel (2) in einer runden Form endet, aufweist während seine geneigten Wände (3) beide an ihren Enden durch weitere Paneele (4) verlängert sind, wobei die Paneele (4) beide parallel zum Scheitel (7) des leicht länglichen Körpers (1) und parallel zueinander oder das eine Paneel oder beide mit einer variablen Neigung angeordnet sind, wobei die oberen Enden der o.g. Paneele (4) in einer Einfassung (5) enden, welche zur Innenseite des Trogs hin geneigt ist, wobei eines oder mehrere der Verschiebeelemente (8) zum Verschieben der Produkte, die verarbeitet werden sollen, sich im Zentrum einer der Wände (3) befindet, wobei die Verschiebeelemente (8) jeweils aus einer Schaufel hergestellt sind, welche die Form eines Uhrzeigers von unterschiedlicher Dicke haben, der sich durch einen hydraulischen Motor (9) dreht,
**dadurch gekennzeichnet, daß**
jedes der Verschiebeelemente (8) optionale Drehrichtungen aufweist, die voneinander unabhängig sind.

2. Trog mit Verschiebeelement zur Vorbereitung von Viehfutter gemäß dem vorangegangenen Anspruch, **dadurch gekennzeichnet, daß** die Zerkleinerungswalze (10) Spiralen aufweist, die an ihrem inneren Anfang vor den Schneiden (11) eine Faustwindung in der Blind-Spirale (a fist turn in blind spiral) (12) aus einem laminierten Abschnitt aufweist, der direkt an der zentralen Achse befestigt ist, die mit der o.g. Drehung an einem Punkt (13) mit einem Radius von in etwa der Hälfte des maximalen äußeren Radius (6) der Spirale (12) beginnt, wobei dieser minimale Anfangsradius des Punktes (13) sich in zunehmend wachsender Weise nach einem Durchlauf von 90 Grad dem maximalen Radius (6) annähert.

3. Trog mit Verschiebeelement zur Vorbereitung von Viehfutter gemäß den vorangegangenen Ansprüchen, **dadurch gekennzeichnet, daß** sich die Spirale zu dem vorderen Ende der Walze (6) hin und der Blind-Spirale (12) folgend in drei weiteren Windungen fortsetzt, wobei die drei Windungen als eine Scheibe (15) mit variabler Höhe und Dicke gestaltet sind, wobei die drei Windungen der Achse (7) durch eine Anzahl von Radien (16) und mit Hilfe einer Anzahl von Halterungen (17) befestigt sind.

4. Trog mit Verschiebeelement zur Vorbereitung von Viehfutter gemäß den vorangegangenen Ansprüchen, **dadurch gekennzeichnet, daß** die Spirale, welche dem rückseitigen Ende entspricht, ähnlich derjenigen ist, die dem vorderen Ende entspricht, außer daß die vordere Spirale drei scheibenbasierte Spiralwindungen (plate-based spiral turns) (15) aufweist, während die rückseitige Spirale zwei der o.g. scheibenbasierten Spiralwindungen (15) aufweist.

## Revendications

1. Auge munie d'un élément à organe de deplacement pour la préparation des aliments du bétail, du type intégré à certaines remorques convenant à cet effet, pour le hachage, le melange et l'homogénéisation des divers produits qui forment les aliments du bétail utilisés dans les installations d'élevage, ayant un corps légèrement allongé (1) dont la section a une forme en V à sa moitié inférieure approximativement, le sommet (2) de cette forme aboutissant à une configuration circulaire, alors que ses parois inclinées (3) sont prolongées chacune à leur extrémité par d'autres panneaux (4), dans laquelle ces panneaux (4) sont disposés parallèlement au sommet (7) du corps légèrement allongé (1) et parallèlement les uns aux autres ou l'un ou les deux ayant une inclinaison variable, les extrémités supérieures des panneaux précités (4) se terminant par une frange (5) inclinée vers l'intérieur de l'auge, un ou plusieurs éléments (8) à organe de déplacement des produits à manipuler étant placés au centre de l'une des parois (3), ces éléments (8) à organe de déplacement étant formés chacun d'une pelle en forme d'aiguille de montre d'épaisseur variable qui tourne sous l'action d'un moteur hydraulique (9).
**caractérisée en ce que**
chacun des éléments (8) à organe de déplacement a des sens éventuels de rotation indépendants l'un de l'autre.

2. Auge à élément à organe de déplacement pour la préparation des aliments du bétail selon la revendication précédente, **caractérisée en ce que** le rouleau de hachage (10) comprend des spires qui, à leur début interne en avant des pales (11), comportent un premier coude vers une spire pleine (12) de section stratifiée, directement fixée à l'axe central, la spire précitée (12) commençant en un point (13) correspondant à un rayon approximativement égal à la moitié du rayon externe maximal (6) de la spire (12), ce rayon initial minimal du point (13) ayant une valeur proche à égale croissant progressivement vers le rayon maximal (6) après une rotation d'environ 90°.

3. Auge selon l'une quelconque des revendications précédentes, **caractérisée en ce que**, vers l'extrémité avant du rouleau (6) et en suivant la spire pleine (12), la spire continue sur trois tours supplémentaires, les trois tours étant formés d'une plaque (15) de hauteur et d'épaisseur variables, les trois tours étant fixées à l'axe (7) par un certain nombre de rayons (16) et avec la collaboration d'un certain nombre de supports (17).

4. Auge selon l'une quelconque des revendications précédentes, **caractérisée en ce que** la spire correspondant à l'extrémité arrière est analogue à celle qui correspond à l'extrémité avant, mis à part le fait que la spire avant a trois tours de spire (15) à base de plaque alors que la spire arrière a deux tours (15) de spire à base de plaque précitée.
